Europäisches Patentamt

European Patent Office

Office européen des brevets

(19)

(11) **EP 1 457 949 A2**

(12) ## EUROPEAN PATENT APPLICATION

(43) Date of publication:
**15.09.2004 Bulletin 2004/38**

(51) Int Cl.⁷: **G09B 29/00**, G01C 21/26

(21) Application number: **04004965.2**

(22) Date of filing: **03.03.2004**

(84) Designated Contracting States:
**AT BE BG CH CY CZ DE DK EE ES FI FR GB GR
HU IE IT LI LU MC NL PL PT RO SE SI SK TR**
Designated Extension States:
**AL LT LV MK**

(30) Priority: **07.03.2003 JP 2003062406**

(71) Applicant: **MATSUSHITA ELECTRIC INDUSTRIAL
CO., LTD.
Kadoma-shi, Osaka 571-8501 (JP)**

(72) Inventors:
• **Senda, Keiichi
Kyoto-shi Kyoto, 606-8397 (JP)**

• **Nishimura, Kenji
Nabari-shi Mie, 518-0646 (JP)**
• **Araki, Hitoshi
Hirakata-shi Osaka, 573-1105 (JP)**
• **Yuda, Masato
Osaka-shi Osaka, 532-0022 (JP)**
• **Kawasaki, Yoshiteru
Toyonaka-shi Osaka, 560-0003 (JP)**

(74) Representative: **Balsters, Robert et al
Novagraaf International S.A.
25, avenue du Pailly
1220 Les Avanchets - Geneva (CH)**

(54) **Map displaying apparatus**

(57)    A map displaying apparatus includes a map data storing unit that stores map data, a map drawing data generating unit that generates map drawing data, a sound data inputting unit that stores sound data and inputs sound data into the map drawing data generating unit, a drawing unit that carries out a drawing process for the map drawing data generated by the map drawing data generating unit to generate an image to be displayed on a screen, and a displaying unit that displays the image generated by the drawing unit on an actual screen.

## FIG. 1

EP 1 457 949 A2

Description

**BACKGROUND OF THE INVENTION**

**(1) Field of the Invention**

The present invention relates to a map displaying apparatus that displays a map on a screen, and in particular to a map displaying apparatus that generates a three-dimensional image from electronic map data and displays a map on a screen.

**(2) Description of the Related Art**

A map displaying apparatus that generates a three-dimensional image from electronic map data and displays the image is conventionally available (see Japanese Laid-Open Patent Publication No. H09-281889, for example), and is applied, for example, to a car navigation apparatus or map displaying software for a personal computer.

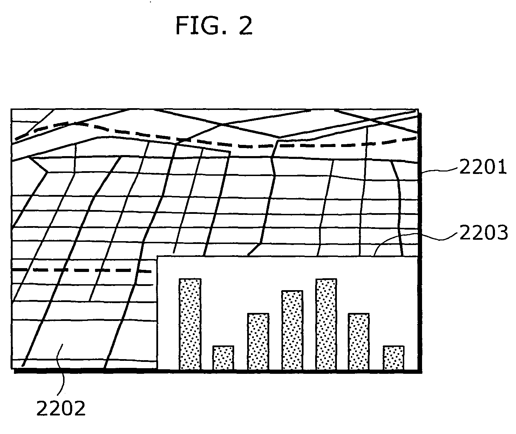

Also, map displaying apparatuses in recent years have not only a map displaying function but also an audio function. For this kind of map displaying apparatus, a graphic equalizer (see FIG. 2) or the like that displays the magnitudes of the outputted sounds in respective frequency bands is known as a means that displays information on sounds from an audio function on a screen.

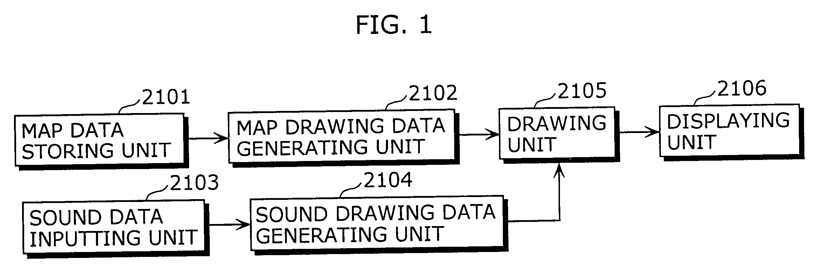

FIG. 1 is a block diagram showing part of the construction of a conventional map displaying apparatus.

This map displaying apparatus includes a map data storing unit 2101 that stores map data such as roads and topography, a map drawing data generating unit 2102 that fetches map data from the map data storing unit 2101 and generates map drawing data to be displayed on a screen, a sound data inputting unit 2103 that stores sound data such as magnitudes and frequency bands for sounds received from an audio function, a sound drawing data generating unit 2104 that generates sound drawing data for a graphic equalizer or the like using sound data from the sound data inputting unit 2103, a drawing unit 2105 that carries out a drawing process using image data generated by the map drawing data generating unit 2102 and the sound drawing data generating unit 2104 to generate an image on the screen, and a displaying unit 2106 that displays an image obtained from the drawing unit 2105 on a screen of a display or the like.

Accordingly, in this kind of conventional map displaying apparatus, the information inputted by the sound data inputting unit 2103 is drawn as sound drawing data for a graphic equalizer or the like by the sound drawing data generating unit 2104 and is then transferred to the drawing unit 2105, so that the sound drawing data and the map drawing data are generated separately.

FIG. 2 is a diagram showing a case where a conventional map displaying apparatus displays map data and sound data simultaneously.

As shown in FIG. 2, in a conventional map displaying apparatus, to display sound data like a graphic equalizer, it is necessary to provide a sound data display region 2203 as a separate region to a map data display region 2202 on a display screen 2201. The drawing unit 2105 first draws the map generated in the map drawing data generating unit 2102 on the entire display screen 2201 and then superimposes the sound data display generated in the sound drawing data generating unit 2104 on a sound data display region 2203 that is part of the screen.

In a conventional map drawing apparatus, aside from the display method shown in FIG. 2, there is another display method that splits the display region of the screen into a map display rectangular region and a sound data display rectangular region and draws the map data and the sound data in the respective regions.

In this way, with the conventional map displaying apparatuses described above, when sound data showing the sound quality of audio or an audio input status is displayed on a screen, display is carried out with the screen split into a map data display region and a sound data display region or with the sound data display being superimposed on the map data display, so that in a normal map displaying apparatus that has a small display screen, there has been the problem that the display screen has been crowded and difficult to view.

Also, in a conventional map displaying apparatus, since a sound data display region for displaying sound data outputted from an audio function is required, the map data display region is reduced, resulting in problems such as it being difficult for the user of the map displaying apparatus to make out the map display. This problem is especially serious for map displaying apparatuses such as car navigation apparatuses that have a relatively small screen.

The present invention was conceived in view of the problems described above and it is an object of the present invention to provide a map drawing apparatus that can allow a user to visually grasp sound data, such as a sound quality and an audio input status, of audio from an audio function without reducing the map data display region on a screen of the map displaying apparatus.

## SUMMARY OF THE INVENTION

In order to solve the problems described above, a map displaying apparatus according to the present invention includes: a map data storing unit operable to store map data; a sound data obtaining unit operable to obtain sound data; and an image generating unit operable to generate map drawing data based on the map data stored in the map data storing unit and the sound data obtained from the sound data obtaining unit.

The map data stored in the map data storing unit may be data relating to at least one three-dimensional object, and the image generating unit may change one of a shape and a position of the at least one three-dimensional object in accordance with changes in the sound data. Here, the shape may be changed by changing a height of the at least one three-dimensional object.

Also, the map data stored in the map data storing unit may be data relating to three-dimensional objects, and the image generating unit may change color data applied to the at least one three-dimensional object based on changes in the sound data.

Also, the map data stored in the map data storing unit may be data relating to three-dimensional objects, and the image generating unit may change a display region for the at least one three-dimensional object on a screen based on changes in the sound data.

In addition, the map data stored in the map data storing unit may be data relating to three-dimensional objects, and the image generating unit may carry out a process that shakes top vertices of the at least one three-dimensional object based on changes in the sound data.

Also, the map data stored in the map data storing unit may be data relating to least one mountain object, and the image generating unit may change color data relating to colors of a mesh included in mesh data applied to the at least one mountain object based on changes in the sound data.

It should be noted that the present invention can be realized not just by the map displaying apparatus described above but also by a map displaying method in which the units provided in such map displaying apparatus have been converted to steps.

It should also be obvious that the above map displaying method can be realized by a program that is executed by a computer or the like, and that such program can be distributed using a recording medium such as a CD-ROM or via a transfer medium such as a communication network.

## BRIEF DESCRIPTION OF THE DRAWINGS

These and other objects, advantages and features of the invention will become apparent from the following description thereof taken in conjunction with the accompanying drawings that illustrate specific embodiments of the invention. In the Drawings:

FIG. 1 is a block diagram showing part of the construction of a conventional map displaying apparatus;
FIG. 2 is a diagram showing a case where a conventional map displaying apparatus displays map data and sound data simultaneously;
FIG. 3 is a block diagram showing part of the construction of a map displaying apparatus according to a first embodiment;
FIG. 4 is a flowchart showing the procedure of the display process for three-dimensional objects that are to be displayed on a screen of the map displaying apparatus according to the first embodiment;
FIG. 5 is a diagram useful in explaining a projection transformation process by a projection transformation unit;
FIG. 6 is a diagram useful in explaining the altitude data;
FIG. 7 is a diagram showing mesh data that represents a topographical shape;
FIG. 8 is a flowchart showing the detailed procedure of S203 for the map displaying apparatus according to the first embodiment;
FIGS. 9A and 9B are diagrams showing the screen of the map displaying apparatus according to the first embodiment;
FIG. 10 is a block diagram showing part of the construction of a map displaying apparatus according to a second embodiment;
FIG. 11 is a flowchart showing the procedure of the coloring process for three-dimensional building objects to be displayed on a screen of a map displaying apparatus according to the second embodiment;
FIGS. 12A and 12B are diagrams showing a screen of the map displaying apparatus according to the second embodiment;
FIG. 13 is a block diagram showing one part of the construction of a map displaying apparatus according to a third embodiment;
FIG. 14 is a flowchart showing a procedure for setting a display region of three-dimensional building objects in the map displaying apparatus according to the third embodiment;

FIGS. 15A and 15B are diagrams showing the screen of the map displaying apparatus according to the third embodiment;

FIG. 16 is a block diagram showing processing units provided in a map displaying apparatus according to a fourth embodiment;

FIG. 17 is a flowchart showing a detailed procedure of S205 for the map displaying apparatus according to the fourth embodiment;

FIGS. 18A and 18B are diagrams showing the screen of the map displaying apparatus according to the fourth embodiment;

FIG. 19 is a block diagram showing part of the construction of the map displaying apparatus according to the fifth embodiment of the present invention;

FIG. 20 is a flowchart showing a detailed procedure of S202 for the map displaying apparatus according to the fifth embodiment;

FIGS. 21A and 21B are diagrams showing a screen of the map displaying apparatus according to the fifth embodiment of the present invention; and

FIG. 22 is a block diagram showing part of the construction of a map displaying apparatus according to a sixth embodiment of the present invention.

## DESCRIPTION OF THE PREFERRED EMBODIMENTS

A map displaying apparatus according to the present invention will now be described in detail with reference to the attached drawings. It should be noted that examples of the map displaying apparatus according to the present invention include a car navigation apparatus equipped with an audio function, a PDA equipped with an audio function, and a PC, with such apparatuses having an output function for sounds and a screen capable of displaying a map.

First Embodiment

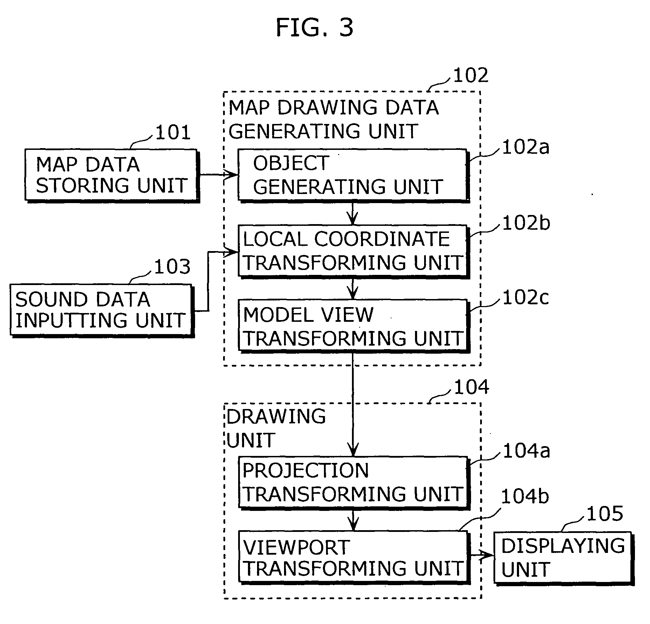

A map displaying apparatus according to a first embodiment of the present invention changes the height of three-dimensional building objects that are map display objects displayed on a screen in accordance with magnitudes, frequency components and the like of sounds. By doing so, it is possible for the user of the map displaying apparatus to visually grasp the sound quality of audio and audio input status at the same time as a map. It should be noted that although the sound data used in the embodiments described below is the magnitude S of sounds, the sound data is not limited to the magnitude S and other data such as data relating to frequency bands showing high and low sounds is also conceivable. FIG. 3 is a block diagram showing part of the construction of the map displaying apparatus according to the first embodiment.

The map displaying apparatus according to the first embodiment includes a map data storing unit 101 that stores map data such as position information and height information of objects to be displayed on a screen, a map drawing data generating unit 102 that obtains map data from the map data storing unit 101 and sound data from a sound data inputting unit 103 and generates map drawing data such as shape data for objects, the sound data inputting unit 103 that stores a plurality of sound data composed of magnitude values and the like for respective frequency bands of sounds outputted from an audio function and also inputs sound data into the map drawing data generating unit 102, a drawing unit 104 that carries out a drawing process for the map drawing data generated by the map drawing data generating unit 102 and generates images to be displayed on the screen, and a displaying unit 105 that displays the images generated by the drawing unit 104 on an actual screen such as a display.

The map data storing unit 101 stores map data composed of data such as position information of roads, urban areas, topography, and the like to be displayed on the screen expressed using longitudes and latitudes, height information and attribute information, three-dimensional building data composed of heights and boundary rectangle information of three-dimensional objects to be displayed on the screen, and altitude information composed of heights of lattice vertices in the longitude and latitude directions showing an undulating shape of a land surface.

In the first embodiment, the map data storing unit 101 stores three-dimensional building data composed of heights H of buildings that are three-dimensional objects, numbers of vertices N of N-gonal prisms that compose boundary rectangles of buildings, vertex coordinates $X_i$ (where i=1 to n), and attributes and the like. Here, the vertex coordinates $X_i$ of the N-gonal prism shapes of buildings are assumed to be two-dimensional coordinates. In addition, surface information such as an index composed of colors, textures, and surfaces is used as the attributes for drawing the N-gonal prism shapes of buildings.

Based on map data from the map data storing unit 101 and sound data from the sound data inputting unit 103, the map drawing data generating unit 102 generates map drawing data composed of (a) shape data composed of (i) coordinates of element vertices composing surfaces, lines, points and the like of three-dimensional objects and (ii) connection information for the element vertices, and (b) drawing information such as color values and texture images for drawing objects. Also, in the case where three-dimensional objects are formed of meshes, the map drawing data generating unit 102 generates mesh data composed of information on mesh shapes and colors. The map drawing data generating unit 102 is composed of an object generating unit 102a, a local coordinate transforming unit 102b, and a model view transforming unit 102c.

The object generating unit 102a carries out a generation process for three-dimensional objects, such as buildings, to be displayed on the screen using map data such as latitude/longitudes, height information, and building types. In the case where the three-dimensional objects to be displayed on the screen are N-gonal prism shapes, the object generating unit 102a fetches three-dimensional building data stored in the map data storing unit 101 and finds 2xN three-dimensional vertex coordinates $Y_i$ (where i=1 to n) and $Z_i$ (where i=1 to n) that construct the N-gonal prism shapes of buildings. Here, $Y_i$ are vertex coordinates that compose a lower surface on a plane at the height zero of the N-gonal prism, while $Z_i$ are vertex coordinates that compose an upper surface on a plane at a height H of the N-gonal prism. It should be noted that the respective vertex coordinates of the three-dimensional objects found by the object generating unit 102a are referred to as "local coordinates" in a coordinate systems centered on a three-dimensional object.

In addition, the object generating unit 102a finds an arrangement of vertex numbers that construct N side surfaces and a single upper surface. The colors and textures of each surface that are drawing information are assigned according to the orientation of a normal of each surface. It should be noted that when drawing information is included in the three-dimensional building data in advance, the object generating unit 102a assigns the color and texture of each surface based on the three-dimensional building data. In addition, although the first embodiment is described with three-dimensional building data being shown as the map data, there is also a case where altitude data, which is composed of the heights of lattice vertices in the latitude and longitude directions and expresses the undulating shape of a land surface, is handled, with this case being described later in a fifth embodiment of the present invention.

It should be noted that when texture data is included in the drawing data, the object generating unit 102a can also carry out a texture data changing process that selects texture data of respective surfaces of three-dimensional building objects to be displayed on the screen from a plurality of textures and/or edits some or all of the texture data based on the sound data obtained from the sound data inputting unit 103. For example, a method that divides a domain that can be assumed by the sound data obtained from the sound data inputting unit 103 into a plurality of regions and assigns a texture number to each of the divided regions could conceivably be used as the method of selecting the texture data by the object generating unit 102a.

The local coordinate transforming unit 102b carries out a shape data changing process for three-dimensional objects generated from the map data in the object generating unit 102a, based on the sound data obtained from the sound data inputting unit 103. More specifically, the local coordinate transforming unit 102b changes a local coordinate transformation matrix using the magnitude S of sounds that is the sound data obtained from the sound data inputting unit 103. This local coordinate transformation matrix is a matrix for carrying out a transformation from a coordinate system centered on a three-dimensional object to a global coordinate system that is a larger coordinate system.

In this way, the local coordinate transforming unit 102b changes the local coordinate transformation matrix based on the magnitude S of sounds, so that the heights of the three-dimensional building objects that are displayed on the screen change in accordance with the magnitude S of sounds.

A model view transforming unit 102c determines, from distances between viewpoint coordinates expressing a viewpoint and global coordinates of respective vertices of the three-dimensional building objects and the like, at what position and how large the three-dimensional objects that are models will be displayed. More specifically, the model view transforming unit 102c carries out a process that transforms the coordinates of each vertex of three-dimensional objects in the global coordinate system to a viewpoint coordinate system using a model view transformation matrix. The viewpoint coordinates are one point in the global coordinate system, and can be set for example according to an indication from the user or based on a present position (i.e., a vehicle position) of a moving body in which the map displaying apparatus has been fitted.

The shape data changing process for three-dimensional objects carried out by the map drawing data generating unit 102 transforms all of the vertex coordinates Q (X, Y, Z, 1) that compose the shape data included in the map drawing data to three-dimensional coordinates Q '(X', Y', Z', 1) using a shape data changing matrix having four rows and four columns. It should be noted that the elements in the fourth row of the vertex coordinates Q (X, Y, Z, 1) during transformation and the vertex coordinates Q '(X', Y', Z', 1) after transformation are all ones so that the effects of translating elements in the shape data changing matrix can be realized.

The sound data inputting unit 103 stores sound data such as music outputted from an audio function or the like provided in the map displaying apparatus according to the present invention and also inputs the sound data into the local coordinate transforming unit 102b included in the map drawing data generating unit 102.

The sound data stored in the sound data inputting unit 103 is normally updated at intervals of a fixed time. In addition, it is possible for the sound data to include parameters showing the user's tastes and a genre for music.

The drawing unit 104 generates an image to be displayed on the screen by carrying out a drawing process

**EP 1 457 949 A2**

that transforms and projects the three-dimensional map drawing data processed by the map drawing data generating unit 102 onto the actual two-dimensional screen. In the first embodiment, the drawing unit 104 includes a projection transformation unit 104a and a viewport transformation unit 104b.

The projection transformation unit 104a sets a projection transformation matrix for respective vertex coordinates of three-dimensional objects in the viewpoint coordinate system set by the model view transforming unit 102c, and carries out a projection transformation process that projects the respective vertex coordinates of the three-dimensional objects onto the two-dimensional screen. This projection transformation process projects onto a screen transformed to a coordinate system centered on the viewpoint coordinates where the viewpoint direction is a positive direction in the Z axis. The projection transformation unit 104a carries out a process that specifies clip coordinates and trims lines and surfaces of objects that extend beyond a viewing pyramid including the viewpoint coordinates and the clip coordinates.

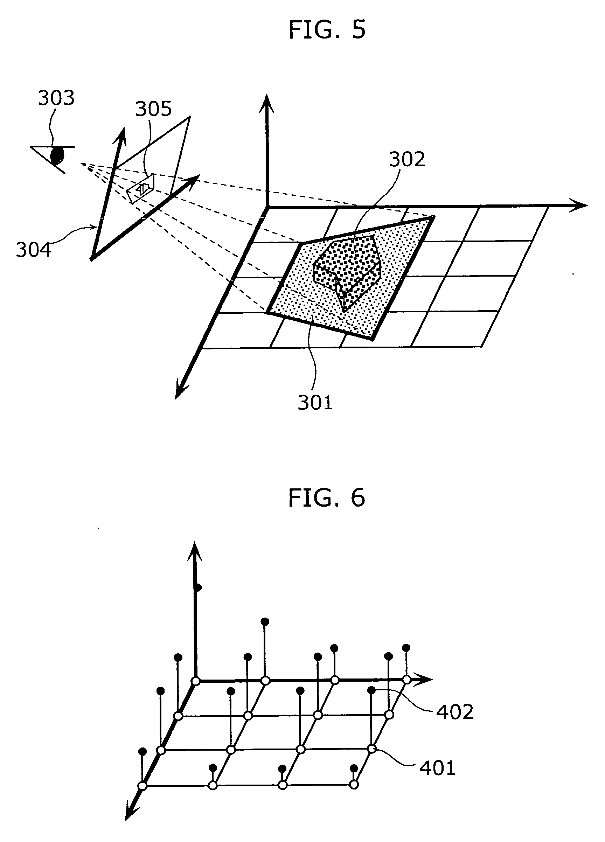

FIG. 5 is a diagram useful in explaining the projection transformation process by the projection transformation unit 104a. As shown in FIG. 5, a drawing region 301 and map drawing data 302 are displayed in a three-dimensional coordinate system in the global coordinate system.

The projection transformation unit 104a determines a projection transformation matrix M with four rows and four columns that is determined from a viewpoint 303 disposed at a position corresponding to the viewpoint coordinates and a gaze vector. The projection transformation unit 104a also carries out a matrix transformation of a three-dimensional coordinate system for three-dimensional building objects and the like using the projection transformation matrix M, thereby transforming the three-dimensional coordinates to a coordinate system on a two-dimensional screen 304. As a result, the positions on the screen at which the respective coordinates of three-dimensional building objects are to be disposed are decided, and an image 305 that has been projected onto the screen 304 of the map displaying apparatus is displayed. It should be noted that during the projection transformation, it is normal to draw objects close to the viewpoint 303 large and objects far from the viewpoint small.

The projection transformation unit 104a carries out a fill process for each surface of the three-dimensional object based on the vertex coordinate data subjected to the projection transformation process. In this fill process, the projection transformation unit 104a carries out a hidden surface removal process based on depth information from the viewpoint called "Z values" that are calculated by the projection transformation process. This hidden surface removal process detects objects and surfaces that cannot be seen from the viewpoint 303 and prevents such objects and surfaces from being drawn. Possible methods for realizing this hidden surface removal process include a Z buffer method that assigns depth information in units of each pixel in the display screen, judges depth information for each pixel during drawing, and draws only the nearest objects and a Z sort method that rearranges the surfaces to be drawn in order in the depth direction and draws the surfaces starting from the surface furthest from the viewpoint.

It should be noted that although the projection transformation unit 104a has been described as transforming the respective coordinate vertices of the three-dimensional object to two-dimensional screen coordinates using a projection transformation matrix M from the predetermined viewpoint 303, a target point position, and the like, it is also conceivably possible to carry out a projection transformation matrix generation process that generates a projection transformation matrix M' based on sound data obtained from the sound data inputting unit 103 and uses this projection transformation matrix M' to transform the respective coordinate vertices of the three-dimensional objects to two-dimensional screen coordinates. Such transformation is described later in a sixth embodiment of the present invention.

Also, FIG. 6 is a diagram useful in explaining the altitude data. The map data storing unit 101 stores altitude values Hxy (402) corresponding to altitude reference points Pxy (401) that are lattice points on an XY plane. In this case, the map drawing data generating unit 102 generates mesh data representing a topographical shape from four adjacent altitude reference points Pxy, P(x+1)y, P×(y+1), and P(x+1)(y+1) and four adjacent altitude values Hxy, H(x+1)y, Hx(y+1), and H(x+1)(y+1).

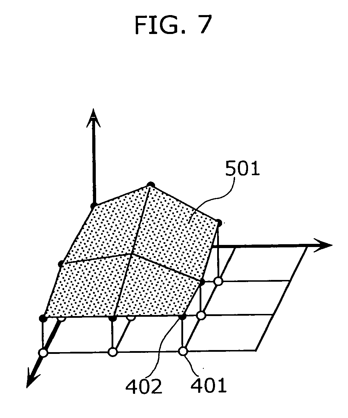

FIG. 7 is a diagram showing mesh data 501 that represents a topographical shape. The map drawing data generating unit 102 generates the mesh data 501 representing the topographical shape using data for the altitude reference points and altitude values. Like the N-gonal prism data described above, this mesh data 501 is data composed of drawing data and the like for three-dimensional vertex coordinates, vertex number arrangements composing surfaces, colors, and textures.

The viewport transformation unit 104b carries out a matrix transformation of all vertex coordinates of three-dimensional objects using a viewport transformation matrix after the projection transformation in the projection transformation unit 104a in order to transform to an appropriate size of the target display region on the screen of the map displaying apparatus. Here, a "viewport" refers to a rectangular region with a height and width that are smaller than the screen. The viewport transformation unit 104b changes the coordinates that are subjected to the viewport transformation to screen coordinates (Sx,Sy) that are coordinates on the two-dimensional screen.

The displaying unit 105 obtains the screen coordinates (Sx,Sy) determined in the viewport transformation unit 104b and displays the drawing data on a display or the like that is the actual screen of the map displaying apparatus.

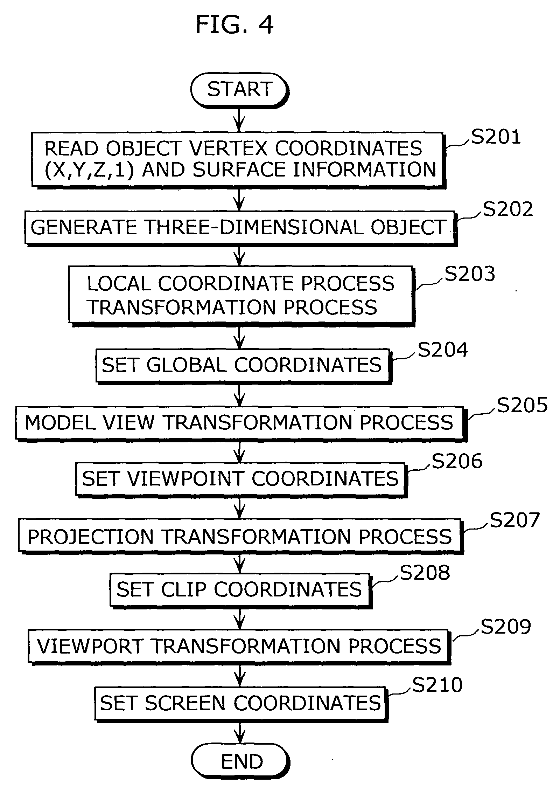

Next, the display process procedure for three-dimensional objects carried out by the map displaying apparatus

6

according to the first embodiment will be described. FIG. 4 is a flowchart showing the procedure of the display process for three-dimensional objects that are to be displayed on the screen of the map displaying apparatus according to the first embodiment

First, the object generating unit 102a reads surface information including vertex coordinates (for example, coordinates (X,Y,Z,1)), color data, texture data, an index that constructs surface data, and the like that are map data of objects stored in the map data storing unit 101 (S201). After this, the object generating unit 102a fetches position information, such as a latitude and longitude of each vertex of polygons of buildings to be generated on the screen and height information for each vertex obtained from the map data storing unit 101, and by applying the position information and height information to each vertex of the polygons of the buildings, generates three-dimensional building objects to be displayed as N-gonal prism data (S202). Also, the object generating unit 102a carries out a coloring process for surfaces and the like of three-dimensional building objects based on the map data.

Next, the local coordinate transforming unit 102b carries out a transformation process for a local coordinate matrix using sound data obtained from the sound data inputting unit 103 (S203), and also obtains local coordinates (X,Y,Z,1) for each vertex from the object generating unit 102a and sets global coordinates (X',Y',Z',1) by carrying out a matrix transformation using the matrix that has been transformed (S204).

The model view transforming unit 102c sets a model view transformation matrix for transforming the global coordinate system to the viewpoint coordinate system, which defines drawing positions, sizes, and the like of three-dimensional objects from global coordinates and the viewpoint position, and transforms coordinates from the global coordinate system to the viewpoint coordinate system using the model view transformation matrix (S205 and S206). At this point, not just the respective vertex coordinates of the three-dimensional objects but also viewpoint coordinates, light sources, and other information required for positional relationships and the like are arranged in the viewpoint coordinate system.

The projection transformation unit 104a determines the projection transformation matrix M for projecting three-dimensional objects onto a two-dimensional screen, and also carries out a matrix transformation process for transforming viewpoint coordinates to screen coordinates. (S207). It should be noted that at this time, the projection transformation unit 104a sets the clip coordinates for removing lines and surfaces of objects that are not required (S208).

The viewport transformation unit 104b transforms respective coordinates of three-dimensional objects using a viewport transformation matrix in order to make the display positions and sizes of the three-dimensional objects suitable for the actual display screen (S209), and finally sets the screen coordinates that are coordinates on the screen of the map displaying apparatus (S210).

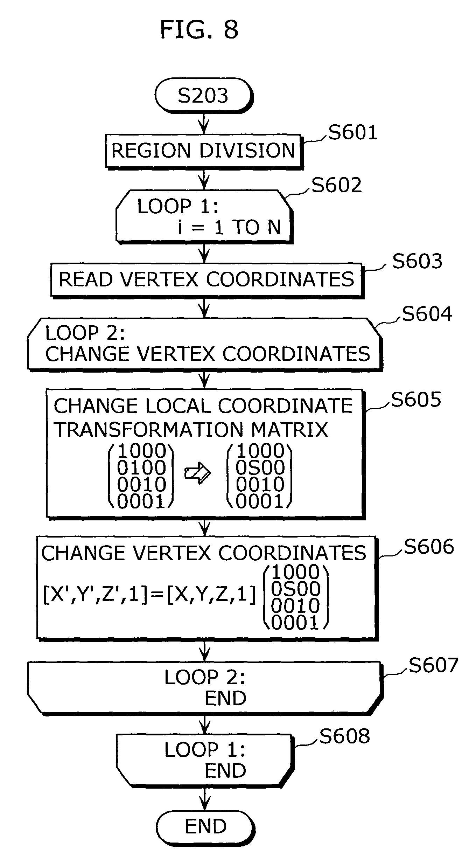

FIG. 8 is a flowchart showing the detailed procedure of S203 for the map displaying apparatus according to the first embodiment. It should be noted that this first embodiment describes the case where the heights H of three-dimensional building objects displayed on the screen of the map displaying apparatus change in accordance with the magnitude S of sounds.

First, the object generating unit 102a divides the screen into regions in which the three-dimensional building objects are to be displayed in accordance with the screen of the map displaying apparatus (S601 and S602). In a case where the sound is divided into N equal frequency bands and the magnitude of the sound in each frequency band is also divided into N equal divisions, for example, this division into regions divides the region of the screen into N equal parts in the horizontal direction and the region above the map into N equal parts in the vertical direction. It should be noted that it is not always necessary to carry out such division into regions, and when objects are changed uniformly in accordance with the sound, such division is not required. The local coordinate transforming unit 102b of the map drawing data generating unit 102 also transforms local coordinates using a local coordinate transformation matrix that is different for each region.

Next, the object generating unit 102a reads respective vertex coordinates of three-dimensional building objects on a region-by-region basis (S603). The local coordinate transforming unit 102b changes the vertex coordinates so that the heights H of three-dimensional building objects are changed to heights H' (where H' = S×H) that are proportionate to the magnitude S of sounds (here, the case where the magnitude S has been normalized so as to be in a range of 0 to 1 is described) (S604).

To change the vertex coordinates, the local coordinate transforming unit 102b changes the local coordinate transformation matrix using the magnitude S of the sound obtained from the sound data inputting unit 103 (S605). Using this changed matrix, vertex coordinates of three-dimensional objects are transformed to values that are proportionate to only a second row, second column component that is a scale component for the magnitude S of the sound and the heights H of the buildings. The remaining components are set with the same values as the identity matrix, so that the local coordinate transforming unit 102b carries out a transformation in the direction of the heights H only in accordance with the magnitude S of the sound (S606).

Next, the local coordinate transforming unit 102b ends the loop of the vertex coordinate changing process (S607). The object generating unit 102a also ends the loop of the reading process for vertex coordinates (S608).

In this way, in the map displaying apparatus according to the first embodiment, vertex coordinates of three-dimensional objects generated by the object generating unit 102a are subjected to a local coordinate transformation using a local coordinate transformation matrix that has been changed in accordance with the magnitude S of sounds, so that the heights H of three-dimensional objects can be changed in accordance with the magnitude S of sounds.

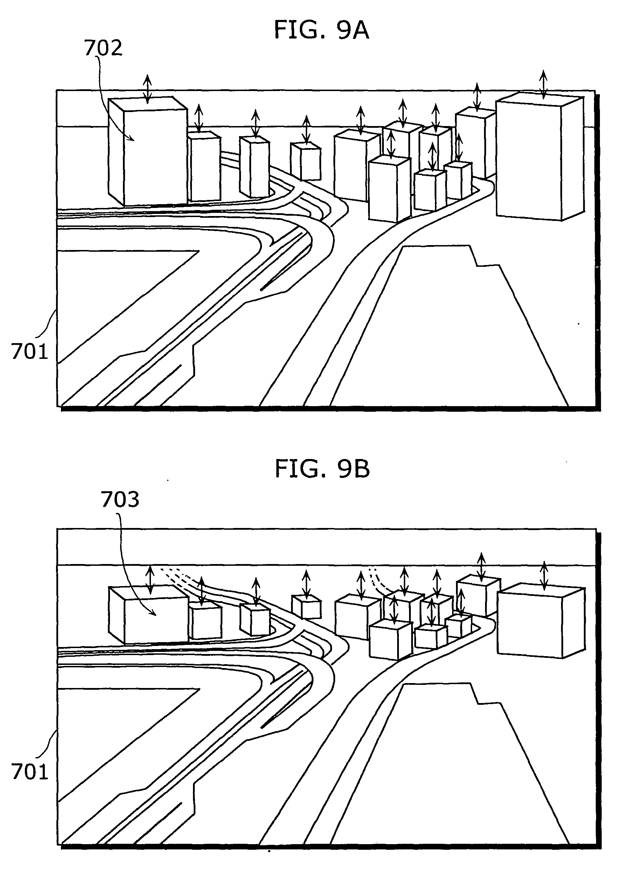

FIGS. 9A and 9B are diagrams showing the screen of the map displaying apparatus according to the first embodiment. For example, FIG.9A shows the case where the magnitude S of sounds is large, while FIG. 9B shows the case where the magnitude S of sounds is small. On a screen 701 of the map displaying apparatus in FIG. 9A, a group of buildings 702 are displayed along roads, while on a screen 701 of the map displaying apparatus in FIG. 9B, a group of buildings 703 are displayed along roads.

The group of buildings 702 and the group of buildings 703 displayed on the screen of the map displaying apparatus according to the first embodiment are displayed with their heights having been changed in accordance with the magnitude S of sounds as can be understood by comparing FIGS. 9A and 9B.

In this way, according to the map displaying apparatus according to the first embodiment, the heights H of three-dimensional building objects that are map display objects can be changed according to sound data composed of magnitudes of sounds, frequency components, and the like, so that the user of the map displaying apparatus can visually grasp the sound quality and audio input status at the same time as the map display. Since the heights H of three-dimensional building objects rise and fall in accordance with the magnitude S of the outputted sounds, a more versatile display can be realized, and a map displaying apparatus that is more entertaining for the user can be provided.

Second Embodiment

Next, a second embodiment according to the present invention will be described. In the second embodiment, the case where the colors of three-dimensional building objects displayed on the screen of the map displaying apparatus are changed in accordance with the magnitude S of sounds will be described.

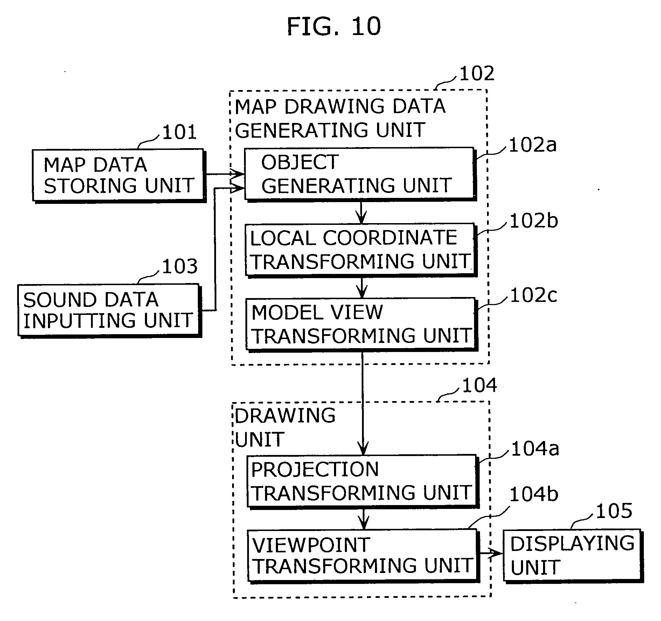

FIG. 10 is a block diagram showing part of the construction of a map displaying apparatus according to the second embodiment. The construction of the map displaying apparatus according to the second embodiment is the same as that of the various processing units of the first embodiment described above, but in the second embodiment, the sound data from the sound data inputting unit 103 is obtained by the object generating unit 102a.

The object generating unit 102a obtains the sound data fetched from the sound data inputting unit 103 and carries out a color data changing process that applies the sound data to three-dimensional objects in accordance with a predetermined function that changes some or all of a plurality of elemental values (such as a blue component, a red component, a green component, and transparency) of color data included in map data obtained from the map data storing unit 101.

For example, the object generating unit 102a carries out a changing process for color data to be applied to three-dimensional building objects using a function in which three components (for example, magnitude of sound, and sound frequency) selected from the sound data inputted into the object generating unit 102a from the sound data inputting unit 103 are respectively proportionate to three components of colors (such as a red component, green component, and blue component).

Accordingly, with the map displaying apparatus according to the second embodiment, the object generating unit 102a obtains map data from the map data storing unit 101 and sound data from the sound data inputting unit 103, and can carry out a coloring process for three-dimensional objects in accordance with the sound data.

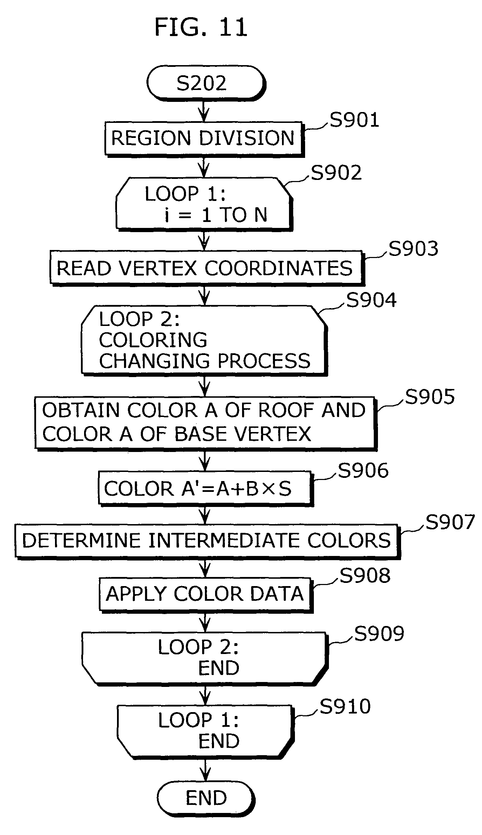

FIG. 11 is a flowchart showing the procedure of the coloring process for three-dimensional building objects to be displayed on the screen of a map displaying apparatus according to the second embodiment. This flowchart shows the detailed procedure of S202 in FIG. 2.

The object generating unit 102a carries out division into regions for the screen on which the three-dimensional building objects are to be displayed in accordance with the screen of the map displaying apparatus (S901 and S902). The processing in this division into regions is the same as in the case shown in FIG. 8.

Next, the object generating unit 102a reads vertex coordinates of three-dimensional building objects included in the divided regions from the map data storing unit 101 (S903). The object generating unit 102a carries out a coloring changing process for three-dimensional building objects using the sound data obtained from the sound data inputting unit 103 (S904). First, the object generating unit 102a obtains a roof color A and a base vertex color A of a three-dimensional building object by reading surface information of the three-dimensional building object from the map data storing unit 101 (S905). The object generating unit 102a changes the color A' of the base vertex of the three-dimensional building object using the roof color A and the sound data obtained from the sound data inputting unit 103 according to the following equation (S906).

$$\text{Base vertex color } A'=A+B\times S \text{ (here, B is a different color to A)}$$

Here, the magnitude S of sounds is a normalized value in a range of 0 to 1, for example.

Next, the object generating unit 102a determines intermediate colors by producing a gradation or the like for the color A of the roof of the three-dimensional building object and the base vertex color A' (S907). Next, the object generating unit 102a applies the color data of the respective surfaces of the three-dimensional building object based on the changed color data (S908).

After this, the object generating unit 102a completes the loop of the coloring changing process for the three-dimensional building objects displayed on the screen (S909), and the object generating unit 102a also completes the loop of the read process for respective vertex coordinates from the map data storing unit 101 (S910).

This means that the object generating unit 102a can carry out a coloring changing process for color data to be applied to three-dimensional objects using the map data obtained from the map data storing unit 101 and the sound data obtained from the sound data inputting unit 103.

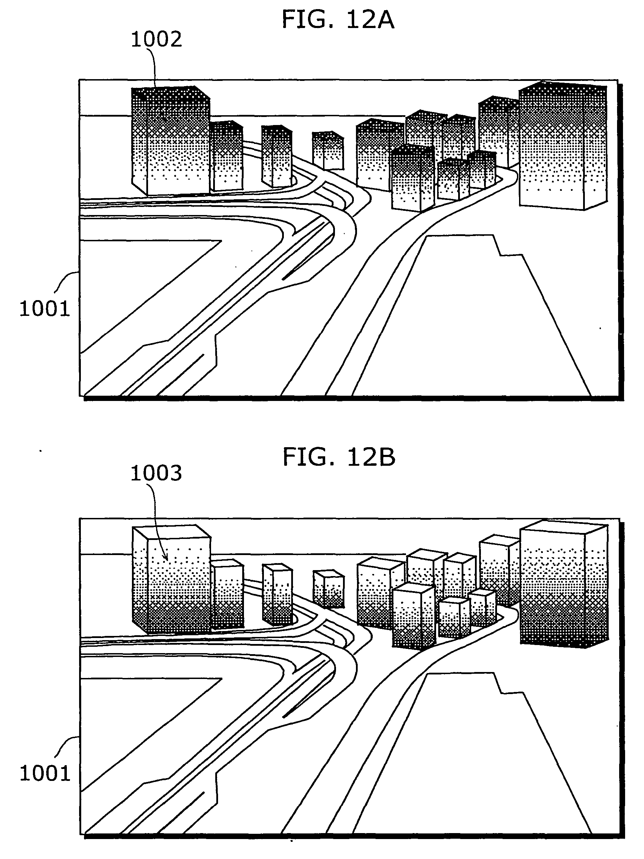

FIGS. 12A and 12B are diagrams showing the screen of the map displaying apparatus according to the second embodiment. FIGS.12A and 12B are diagrams showing cases where the magnitude S of sounds differs. On a screen 1001 of the map displaying apparatus in FIG. 12A, a group of buildings 1002 are displayed along roads, while on a screen 1001 of the map displaying apparatus in FIG. 12B, a group of buildings 1003 are displayed along roads.

Out of the colors of the group of buildings 1002 displayed on the screen 1001 of the map displaying apparatus, the colors of the roofs and the base vertices are changed in accordance with the magnitude S of the sounds. The color of the roofs is red, for example, and the color of the base vertices is blue, for example. The intermediate colors of the buildings depict a gradation between the color of the roofs and the color of the base vertices. The colors of the group of buildings 1003 shown in FIG. 10B change in the same way in accordance with the magnitude S of sounds.

In this way, according to the map displaying apparatus according to the second embodiment, it is possible to change the colors of three-dimensional building objects that are map display objects based on an input of sound data composed of the magnitude of sounds, frequency components, or the like, so that the user of the map displaying apparatus can visually grasp the sound quality of the audio and the audio input status at the same time as the map display. Also, since the map displaying apparatus according to the second embodiment can attractively change the colors of buildings in accordance with changes in sounds, a more versatile display can be realized.


Third Embodiment

Next, a third embodiment according to the present invention will be described. In the third embodiment, the case where a display region of three-dimensional building objects displayed on the screen of the map displaying apparatus is changed in accordance with the magnitude S of sounds will be described.

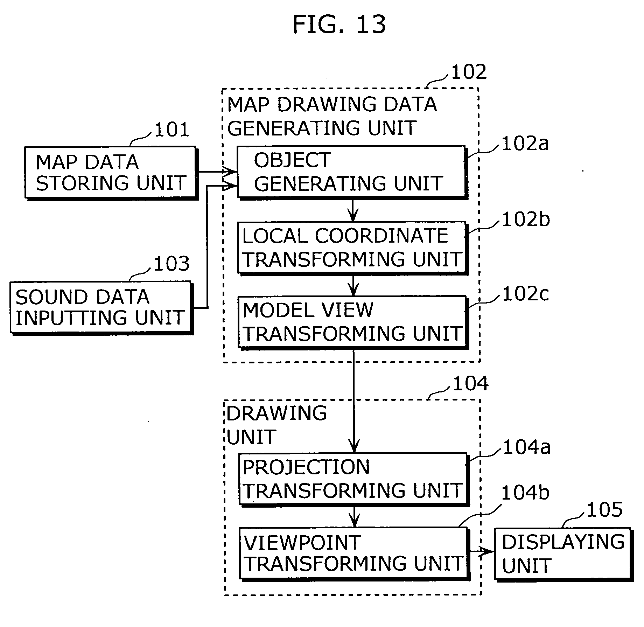

FIG. 13 is a block diagram showing one part of the construction of a map displaying apparatus according to the third embodiment. It should be noted that this block diagram of the map displaying apparatus according to the third embodiment is the same as the block diagram according to the second embodiment, so detailed description thereof has been omitted.

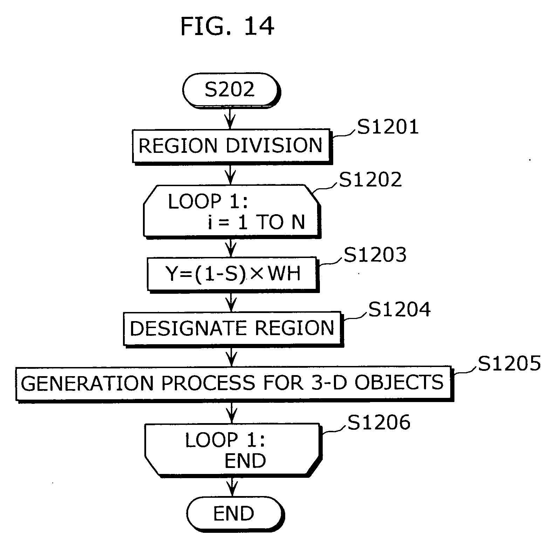

FIG. 14 is a flowchart showing a procedure for setting a display region of three-dimensional building objects in the map displaying apparatus according to the third embodiment. It should be noted that a case where the height of the screen of the map displaying apparatus is set as a screen height WH and a value for determining a three-dimensional display region to be displayed on the screen is set as a screen threshold Y will be described in the third embodiment.

The object generating unit 102a divides the screen on which three-dimensional building objects are to be displayed into regions in accordance with the screen of the map displaying apparatus (S1201 and S1202). The processing in this division into regions is the same as described above.

Next, the map drawing data generating unit 102 performs a calculation of the screen threshold Y according to the following equation. It should be noted that the magnitude S of the sound is assumed to be a normalized value in a range of 0 to 1.

$$Y=(1-S)\times WH(S1203)$$

The object generating unit 102a calculates the screen threshold Y according to the above equation and designates a region for displaying three-dimensional building objects on the screen (S1204). Next, the object generating unit 102a obtains map data such as latitudes and longitudes, height information for buildings, building types, and the like from the map data storing unit 101 and carries out a generation process for three-dimensional objects for the screen region that is not included in the calculated screen threshold Y, and also carries out a process that sets the number of vertices at zero and number of surfaces at zero for three-dimensional building objects in the screen region included in the calculated screen threshold Y (S1205). The object generating unit 102a then ends the loop of the generation process for three-dimensional building objects to be displayed on the screen (S1206).

This means that the object generating unit 102a of the third embodiment can determine the screen threshold according to sound data obtained from the sound data inputting unit 103 and indicate a region where three-dimensional objects are to be generated and a region where three-dimensional objects are not to be generated.

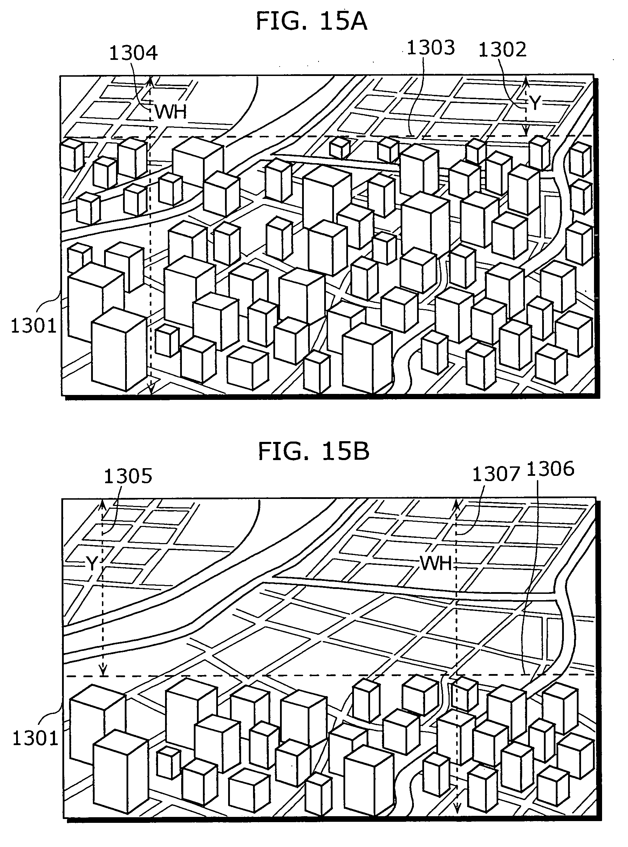

FIGS. 15A and 15B are diagrams showing the screen of the map displaying apparatus according to the third embodiment. On a screen 1301 of the map displaying apparatus shown in FIGS. 15A and FIG. 15B, a perspective view of a town is shown. It should be noted that although in FIG. 15A and FIG. 15B, the change in the three-dimensional object region is carried out in an up-down direction for the screen, this is not a limitation for the present invention, and the region can be changed in any direction, such as a left-right direction. It is also possible to divide the screen into regions in the horizontal direction, for example, and to change the three-dimensional display regions of the screen separately for different frequency bands.

Here, the screen height WH (1304) and the screen height WH (1307) are the dimensions in the height direction of the display or the like of the map displaying apparatus, the screen threshold Y (1302) and the screen threshold Y (1305) are values for determining a three-dimensional display region, and a section line 1303 and a section line 1306 on the screen show upper limits of regions in which three-dimensional objects are to be displayed in accordance with the screen thresholds Y.

In FIG. 15B, the magnitude S of the sounds differs to the case shown in FIG. 15A and as the magnitude S of sounds approaches zero, the screen threshold Y (1305) approaches the screen height WH (1307), and the section line 1306 is changed to a position below the section line 1303. That is, as shown in FIGS. 13A and 13B, the display region for three-dimensional objects changes in accordance with changes in the magnitude S of sounds.

Accordingly, according to the map displaying apparatus according to the present embodiment of the invention, the display region of three-dimensional objects that are map display objects is changed according to an input of sound data composed of a magnitude of sounds, frequency components, and the like, so that the user of the map displaying apparatus can visually grasp the sound quality of the audio and the audio input status at the same time as the map display. Also, since the display region for three-dimensional objects displayed by the map displaying apparatus is changed in the up-down direction of the screen in accordance with sounds, a map displaying apparatus with a more versatile display screen can be realized.

Fourth Embodiment

Next, a fourth embodiment will be described. The case where the map displaying apparatus according to the fourth embodiment carries out a process that shakes the upper vertices of three-dimensional building objects displayed on the screen in a left-right direction in accordance with the magnitude S of sounds will be described.

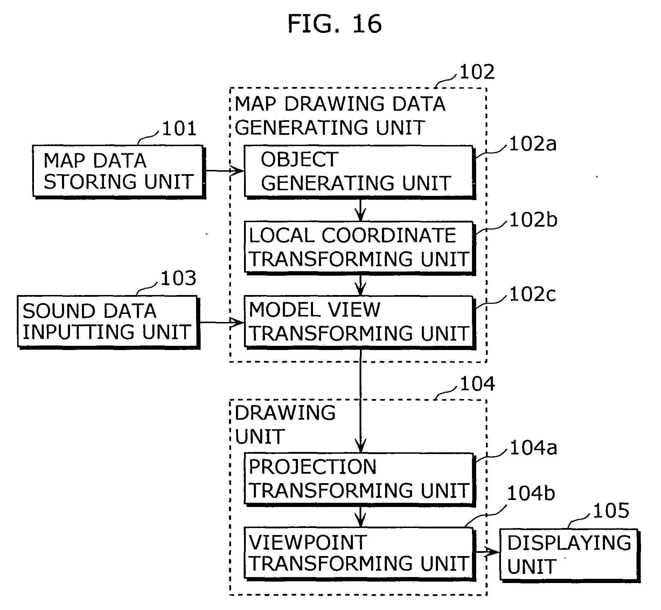

FIG. 16 is a block diagram showing the processing units provided in the map displaying apparatus according to the fourth embodiment. The map displaying apparatus according to the fourth embodiment is characterized by the sound data inputting unit 103 inputting sound data into the model view transforming unit 102c.

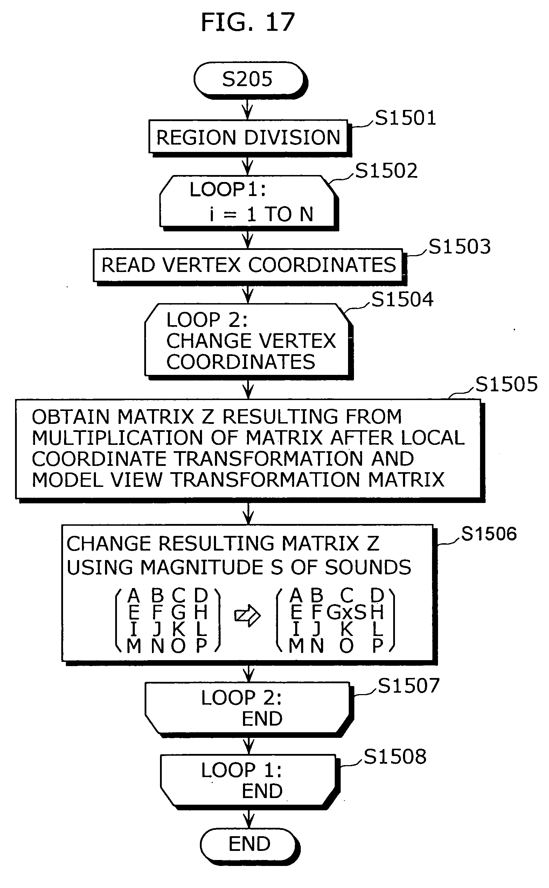

FIG. 17 is a flowchart showing a detailed procedure of S205 for the map displaying apparatus according to the fourth embodiment.

The object generating unit 102a divides the screen in which three-dimensional building objects are to be displayed into regions in accordance with the screen of the map displaying apparatus (S1501 and S1502). Next, the object generating unit 102a reads vertex coordinates for three-dimensional building object models included in the divided regions (S1503). The model view transforming unit 102c also changes the vertex coordinates so that upper vertices of the three-dimensional building objects are displayed having been "shaken" left and right in accordance with the magnitude S of sounds (S1504).

First, the local coordinate transforming unit 102b transforms the local coordinates of the various vertices of three-dimensional objects to coordinates in a global coordinate system using a local coordinate transformation matrix. The model view transforming unit 102c obtains a matrix Z that is a result of multiplication of a matrix after local coordinate transformation and a model view transformation matrix (S1505).

Next, the model view transforming unit 102c carries out a changing process for the resulting matrix Z based on the sound data obtained from the sound data inputting unit 103 (S1506). In this changing process for the matrix Z, a value that makes a translation component (second row, third column element) for height scale components proportionate to the magnitude S of sounds is set, and the remaining components are set as the same values as the identity matrix, so that upper vertices of three-dimensional building objects can be translated.

Next, the model view transforming unit 102c ends the loop of the changing process for vertex coordinates of the three-dimensional building objects (S1507), and the object generating unit 102a ends the read process for vertex coordinates (S1508).

In this way, in the map displaying apparatus according to the fourth embodiment, the model view transforming unit 102c changes, in accordance with the magnitude S of sounds, a matrix Z resulting from multiplication of a matrix after local coordinate transformation and the model view transformation matrix, so that a process that shakes the upper vertices of three-dimensional building objects in a left-right direction in accordance with the magnitude S of sounds can be carried out.

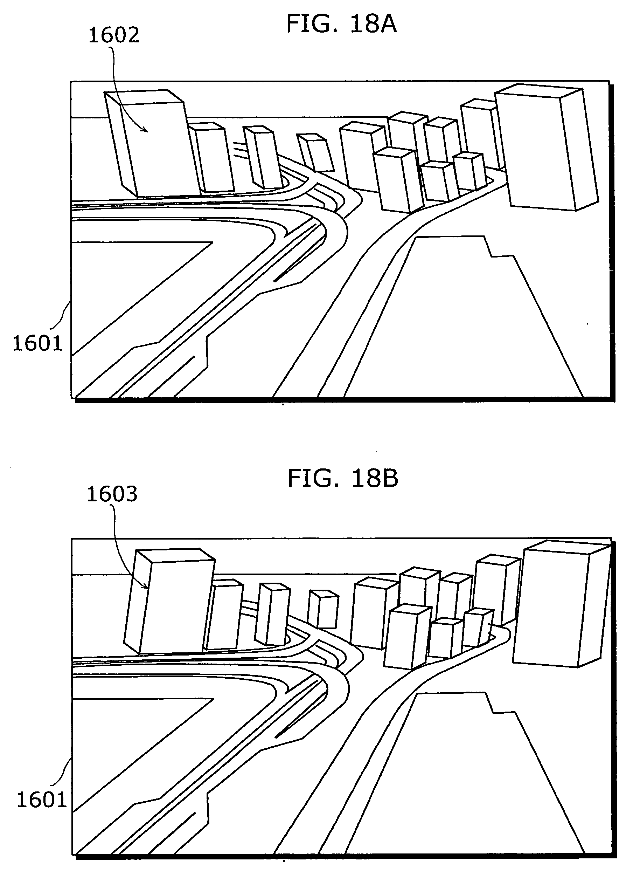

FIGS. 18A and 18B are diagrams showing a screen of the map displaying apparatus according to the fourth embodiment. As shown in FIGS. 18A and 18B, this map displaying apparatus according to the fourth embodiment has the upper vertices of three-dimensional building objects displayed on the screen so as to shake in a left-right direction in accordance with the magnitude S of sounds from an audio apparatus or the like.

On a screen 1601 of the map displaying apparatus in FIG. 18A, a group of buildings 1602 are displayed along roads. On the screen 1601 of the map displaying apparatus in FIG. 18B, a group of buildings 1603 are displayed along roads. As can be seen by comparing FIGS. 18A and 18B, the group of buildings 1602 and the group of buildings 1603 displayed on the screen of the map displaying apparatus are displayed so as to shake in the left-right direction in accordance with the magnitude S of sounds.

In this way, according to the map displaying apparatus according to the fourth embodiment, three-dimensional building objects that are map display objects are displayed so as to shake according to sound data composed of magnitudes of sounds, frequency components, and the like, so that the user of the map displaying apparatus can visually grasp the sound quality of the audio and the audio input status at the same time as the map display. Also, the display screen of the map displaying apparatus of the present invention is more versatile, making the map displaying apparatus more entertaining for users.

Fifth Embodiment

Next, a fifth embodiment of the present invention will be described. A map displaying apparatus according to the fifth embodiment is described for the case where a color changing threshold I for mountain objects displayed on the screen is changed in accordance with the magnitude S of sounds. It should be noted that in the fifth embodiment, the case where mountain objects are generated from mesh data showing a topographical form, such as that shown in FIG. 6 and FIG. 7 described earlier is described. The color changing threshold I is a value for setting a change line for colors of a mountain that is set in proportion with an altitude value from the summit of a mountain object, for example.

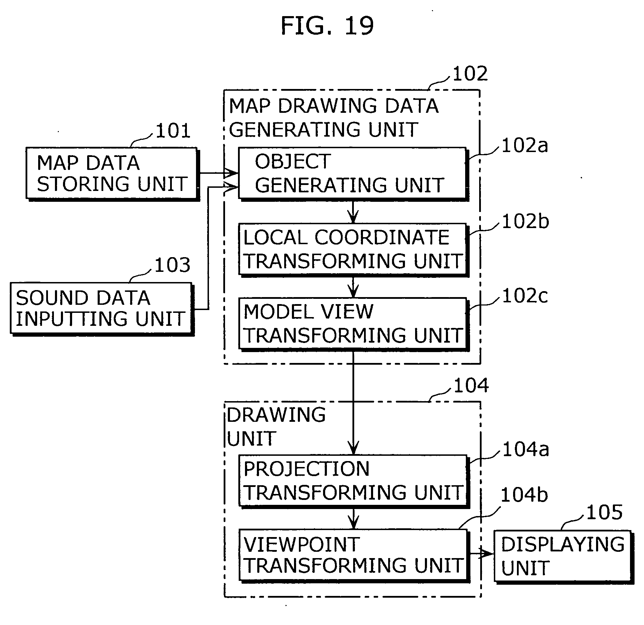

FIG. 19 is a block diagram showing part of the construction of the map displaying apparatus according to the fifth embodiment of the present invention. The map displaying apparatus according to the fifth embodiment is constructed of the same processing units as the second embodiment described earlier.

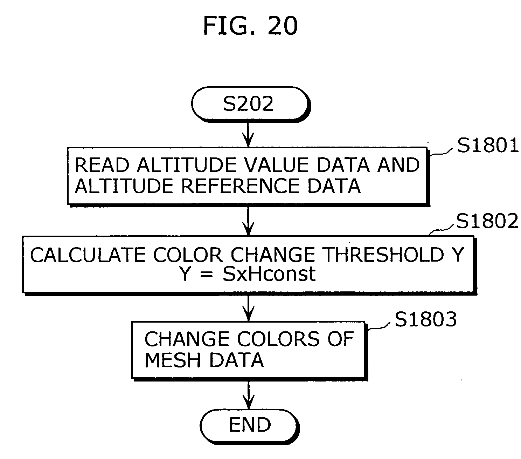

FIG. 20 is a flowchart showing a detailed procedure of S202 for the map displaying apparatus according to the fifth embodiment.

The object generating unit 102a reads altitude value data included in mountain objects and altitude reference point data (S1801). The object generating unit 102a obtains sound data inputted from the sound data inputting unit 103 and changes the color changing threshold I of the mountain object based on the sound data according to the equation below.

$$I = S \times Hconst \quad (S1802)$$

Here, Hconst is an altitude value for a mountain to be displayed on the screen, while the magnitude S of the sounds is normalized in a range of 0 to 1.

The object generating unit 102a changes the colors of mesh data that forms the mountain object according to the color changing threshold I (S1803).

In this way, in the fifth embodiment, the object generating unit 102a calculates the color changing threshold I based on sound data obtained from the sound data inputting unit 103 and changes the colors of mesh data that forms mountain objects, so that the colors of the displayed mountain objects are changed in accordance with the magnitude S of sounds.

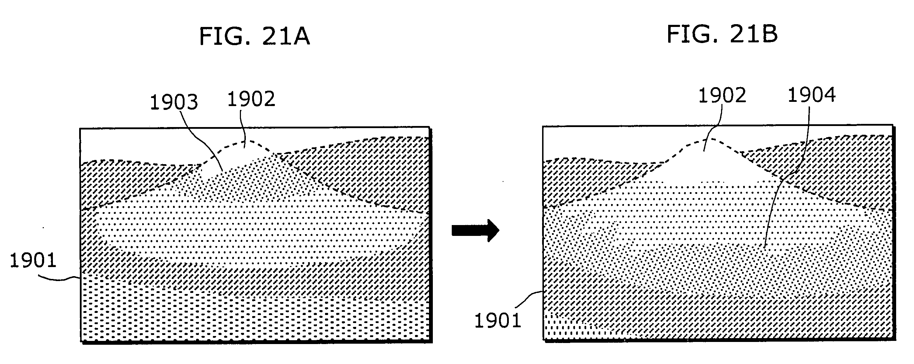

FIGS. 21A and 21B are views showing the screen of the map displaying apparatus according to the fifth embodiment of the present invention. FIGS. 21A and 21B show cases where the magnitude S of sounds differs. T he map displaying apparatus according to the fifth embodiment changes the colors of mountain objects displayed on the screen in accordance with the magnitude S of sounds. It should be noted that a mountain 1902 displayed on a screen 1901 of the map displaying apparatus shows the case where the altitude value is set at 3,000m.

When the magnitude S of sounds is high, the object generating unit 102a sets a color change line 1903 near the summit of the mountain object 1902 since the color changing threshold I approaches 3000m that is the altitude value Hconst. On the other hand, when the magnitude S of sounds is low, the object generating unit 102a sets a color change line 1904 towards the foot of the mountain object 1902, at around 1500m for example, since the color changing threshold I falls below 3000m that is the altitude value Hconst.

The object generating unit 102a changes colors of mesh data of mountain objects in accordance with the color changing threshold I, so that as shown in FIGS. 21A and 21B, the colors of mountain objects change in accordance with the magnitude S of sounds.

In this way, according to the map displaying apparatus according to the fifth embodiment, it is possible to change the colors of mountain objects that are map display objects according to an input of sound data composed of a magnitude of sounds, frequency components, and the like, so that the user of the map displaying apparatus can visually grasp the sound quality of the audio and the audio input status at the same time as the map display. Also, the map displaying apparatus according to the fifth embodiment can change the screen display, such as colors, in accordance with sounds even for a map display with a large scale, so that the screen of a map displaying apparatus can be made more versatile.

It should be noted that although the case where the colors of mountain objects are changed in accordance with sound data is described in the fifth embodiment, the present invention is not limited to this, and it is also conceivable to change the shapes, for example, of mountain objects in accordance with changes in the sound data.

Sixth Embodiment

Next, a sixth embodiment of the present invention will be described. A map displaying apparatus according to the sixth embodiment changes a projection transformation matrix using sound data from the sound data inputting unit 103.

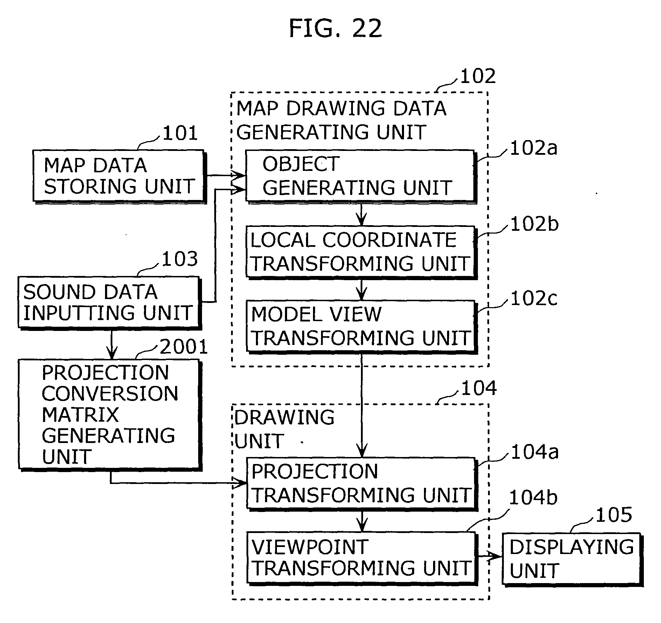

FIG. 22 is a block diagram showing part of the construction of a map displaying apparatus according to the sixth embodiment of the present invention. A projection transformation matrix generating unit 2001 is connected to the sound data inputting unit 103, generates a projection transformation matrix M' based on the obtained sound data, and transfers the projection transformation matrix M' to the projection transformation unit 104a.

The projection transformation unit 104a carries out projection transformation using the projection transformation matrix M' to transform the respective vertex coordinates of three-dimensional objects to screen coordinates.

In this way, although the projection transformation unit 104a is described as using the projection transformation matrix M composed of predetermined viewpoint coordinates, a target point position and the like in a projection transformation process carried out when generating three-dimensional objects from drawing data in the first to fifth embodiments described above, in the sixth embodiment, the projection transformation matrix generating unit 2001 can generate a projection transformation matrix M' that has been changed based on the sound data from the sound data inputting unit 103, and the projection transformation unit 104a can carry out projection transformation of vertices of three-dimensional objects using this projection transformation matrix M'.

It should be noted that although no description of the specific division into regions is given with reference to the drawings in the respective embodiments described above, it should be obvious that it is possible, for example, to divide the screen in the horizontal direction into seven equal regions for frequency bands in accordance with high and low sounds and to change the display in the respective regions in accordance with the sound data.

In addition, as a modification of the three-dimensional objects described above in the embodiments, the three-dimensional objects could conceivably rotate, jump, twist, etc. in accordance with music, and/or be displayed together with a character (such as a female character) inviting the user to play some music.

In addition, it would be conceivable to carry out a filtering process so that only buildings of a predetermined height or higher or predetermined types of buildings are changed in accordance with music.

As described above, the map displaying apparatus according to the present invention includes a map data storage unit operable to store map data, a sound data obtaining unit operable to obtain sound data, and an image generating unit operable to generate map drawing data based on the map data stored in map data storage unit and the sound data obtained from the sound data obtaining unit.

The map data stored by the map data storage unit provided in the map displaying apparatus according to the present invention may be data relating to three-dimensional objects, and the image generating unit may change shapes, such as heights, or positions of the three-dimensional objects based on changes in the sound data.

This means that it is possible to change the height of three-dimensional building objects that are map display objects in accordance with an input of sound data, so that the user of the map displaying apparatus can visually grasp the sound quality of the audio and the audio input status at the same time as the map display. Also, the map data stored in the map data storage unit may be data relating to three-dimensional objects, and the image generating unit may change the color data applied to the three-dimensional objects based on changes in the sound data.

Accordingly, it is possible to change the color of the three-dimensional building objects that are map display objects in accordance with an input of sound data, and the user of the map displaying apparatus can visually grasp the sound quality of the audio and the audio input status at the same time as the map display. Also, the map data stored in the map data storage unit according to the present invention may be data relating to three-dimensional objects and the image generating unit may change a display region of three-dimensional objects on the screen based on changes in the sound data.

Accordingly, it is possible to change the display region of the three-dimensional objects that are map display objects in accordance with an input of sound data, and the user of the map displaying apparatus can visually grasp the sound quality of the audio and the audio input status at the same time as the map display.

Also, the map data stored in the map data storage unit according to the present invention may be data relating to three-dimensional objects and the image generating unit may carry out a process that shakes upper vertices of three-dimensional objects based on changes in the sound data and/or may change the mesh color data applied to mountain objects based on changes in the sound data. As a result, the user of the map displaying apparatus can visually grasp the sound quality of the audio and the audio input status at the same time as the map display.

**Claims**

1. A map displaying apparatus that displays a map, comprising:

   a map data storing unit operable to store map data;
   a sound data obtaining unit operable to obtain sound data; and
   an image generating unit operable to generate map drawing data based on the map data stored in the map data storing unit and the sound data obtained from the sound data obtaining unit.

2. A map displaying apparatus according to Claim 1,
   wherein the map data is data relating to at least one three-dimensional object, and
   the image generating unit changes one of a shape and a position of the at least one three-dimensional object in accordance with changes in the sound data.

3. A map displaying apparatus according to Claim 2,
   wherein the shape is changed by changing a height of the at least one three-dimensional object.

4. A map displaying apparatus according to Claim 3,
   wherein the image generating unit includes:

   an object generating unit operable to fetch the map data stored in the map data storing unit, specify local coordinates of vertices of the at least one three-dimensional object, and carry out a generating process for the at least one three-dimensional object;
   a local coordinate transformation matrix changing unit operable to fetch the sound data from the sound data fetching unit and change, using the sound data, a local coordinate transformation matrix for transforming the local coordinates to global coordinates;
   a local coordinate transforming unit operable to transform the local coordinates of the vertices of the at least one three-dimensional object to global coordinates using the matrix changed by the local coordinate transformation matrix changing unit;
   a model view transforming unit operable to specify viewpoint coordinates for a viewpoint in the global coordinates, and generate the map drawing data by transforming the global coordinates to a coordinate system centered on the viewpoint coordinates using a model view transformation matrix.

5. A map displaying apparatus according to Claim 4,
   wherein the local coordinate transformation matrix is a four-row, four-column transformation matrix, and
   the local coordinate transformation matrix changing unit changes a value of a second row, second column element in the local coordinate transformation matrix based on the sound data.

6. A map displaying apparatus according to Claim 1,
   wherein the map data is data relating to three-dimensional objects, and
   the image generating unit changes color data applied to the at least one three-dimensional object based on changes in the sound data.

7. A map displaying apparatus according to Claim 6,
   wherein the image generating unit includes
   an object generating unit operable to fetch map data stored in the map data storing unit, to specify local coordinates of vertices of the at least one three-dimensional object, and carry out a generation process for the at least one three-dimensional object;

an object coloring changing unit operable to obtain color data of the at least one three-dimensional object stored in the map data storing unit and change the color data based on changes in the sound data obtained from the sound data obtaining unit;

a local coordinate transforming unit operable to set a local coordinate transformation matrix for transforming the local coordinates to global coordinates and transform the local coordinates to global coordinates using the local coordinate transformation matrix; and

a model view transforming unit operable to specify viewpoint coordinates for a viewpoint in the global coordinates, and generate the map drawing data by transforming the global coordinates to a coordinate system centered on the viewpoint coordinates using a model view transformation matrix.

8. A map displaying apparatus according to Claim 7, wherein the object coloring changing unit obtains (a) color data of top vertices of the at least one three-dimensional object, and (b) color data of base vertices of the at least one three-dimensional object from the map data storing unit, and changes the color data of at least one of (a) and (b) based on the sound data obtained from the sound data obtaining unit.

9. A map displaying apparatus according to Claim 8, wherein the object coloring changing unit carries out a gradation process for a color of the top vertices and a color of the base vertices of the at least one three-dimensional object after changing to change intermediate color data of the at least one three-dimensional object.

10. A map displaying apparatus according to Claim 1, wherein the map data is data relating to at least one three-dimensional object, and the image generating unit changes a display region for the at least one three-dimensional object on a screen based on changes in the sound data.

11. A map displaying apparatus according to Claim 10, wherein the image generating unit includes:

a three-dimensional display region setting unit operable to set the display region for the at least one three-dimensional object based on changes in the sound data obtained from the sound data obtaining unit; an object generating unit operable to fetch map data stored in the map data storing unit for the three-dimensional display region set by the three-dimensional display region setting unit, specify local coordinates of vertices of the at least one three-dimensional object, and carry out a generation process for the at least one three-dimensional object, and to not fetch map data stored in the map data storing unit nor carry out a generation process for three-dimensional objects for a non-three dimensional display region set by the three-dimensional display region setting unit; a local coordinate transforming unit operable to set a local coordinate transformation matrix for transforming the local coordinates to global coordinates and transform the local coordinates to global coordinates using the local coordinate transformation matrix; and a model view transforming unit operable to specify viewpoint coordinates for a viewpoint in the global coordinates and generate the map drawing data by transforming the global coordinates to a coordinate system centered on the viewpoint coordinates using a model view transformation matrix.

12. A map displaying apparatus according to Claim 11, wherein the three-dimensional display region setting unit divides the three-dimensional display region into two in one of an up-down direction and a left-right direction of the screen and sets one divided part as the three-dimensional display region and another divided part as the non-three-dimensional display region

13. A map displaying apparatus according to Claim 1, wherein the map data is data relating to at least one three-dimensional object, and the image generating unit carries out a process that shakes top vertices of the at least one three-dimensional object based on changes in the sound data.

14. A map displaying apparatus according to Claim 13, wherein the image generating unit includes:

an object generating unit operable to fetch the map data stored in the map data storing unit, specify local coordinates of vertices of the at least one three-dimensional object, and carry out a generating process for the at least one three-dimensional object;

a local coordinate transforming unit operable to set a local coordinate transformation matrix for transforming the local coordinates to global coordinates and transform the local coordinates to global coordinates using the local coordinate transformation matrix;

a model view transforming unit operable to specify viewpoint coordinates for a viewpoint in the global coordinates and transform the global coordinates to a coordinate system centered on the viewpoint coordinates using a model view transformation matrix; and

a coordinate changing unit operable to obtain the sound data from the sound data inputting unit and generate the map drawing data by carrying out a process that changes a matrix transformed by the model view transforming unit based on changes in the sound data.

15. A map displaying apparatus according to Claim 14,
wherein the coordinate changing unit carries out a process that translates all top vertices of the at least one three-dimensional object in a certain direction.

16. A map displaying apparatus according to Claim 14,
wherein the matrix transformed by the model view transforming unit is a four-row, four-column matrix, and the coordinate changing unit changes a second row, third column element of the matrix based on changes in the sound data.

17. A map displaying apparatus according to Claim 1,
wherein the map data is data relating to mesh data forming at least one mountain object, and the image generating unit changes color data relating to colors of a mesh included in the mesh data based on changes in the sound data.

18. A map displaying apparatus according to Claim 17,
wherein the image generating unit includes:

a color data changing unit operable to change the color data included in the mesh data forming the at least one mountain object based on changes in the sound data obtained from the sound data obtaining unit;

an object generating unit operable to specify local coordinates of vertices of the at least one mountain object using the mesh data including the color data changed by the color data changing unit and carry out a generation process for the at least one mountain object;

a local coordinate transforming unit operable to set a local coordinate transformation matrix for transforming the local coordinates to global coordinates and transform the local coordinates to global coordinates using the local coordinate transformation matrix; and

a model view transforming unit operable to specify viewpoint coordinates for a viewpoint in the global coordinates and generate the map drawing day by transforming the global coordinates to a coordinate system centered on the viewpoint coordinates using a model view transformation matrix;

19. A map displaying apparatus according to Claim 18,
wherein the color data changing unit changes the color data included in the mesh data from a summit side of the at least one mountain object.

20. A map displaying apparatus according to Claim 17,
wherein the mesh data includes altitude data composed of heights above points in a lattice oriented with longitude and latitude directions to express undulations in a land surface, shape data of the mesh, and color data of the mesh.

21. A map displaying apparatus according to Claim 1,
wherein the image generating unit includes a region division unit operable to divide a region of a screen based on frequency bands of the sound data obtained from the sound data obtaining unit, and generates the map drawing data separately for each region produced by division by the region division unit.

22. A map displaying apparatus according to any of Claim 1 to Claim 21,
wherein the image generating unit includes:

a projection matrix changing unit operable to change a projection transformation matrix for projecting the at least one three-dimensional object onto two-dimensional coordinates based on sound data obtained from the sound data obtaining unit; and

a projection transforming unit operable to project and transform a matrix after model view transformation using the projection transformation matrix changed by the projection matrix changing unit.

23. A map displaying apparatus according to Claim 1,
  wherein the sound data includes at least one of data relating to magnitudes of sounds and data relating to magnitudes of sounds in respective frequency bands.

24. A map displaying method for displaying a map, comprising:

  a map data storing step of storing map data;
  a sound data obtaining step of obtaining sound data; and
  an image generating step of generating map drawing data based on the map data stored in the map data storing step and the sound data obtained in the sound data obtaining step.

25. A program for a map displaying apparatus that displays a map, comprising:

  a map data storing step of storing map data;
  a sound data obtaining step of obtaining sound data; and
  an image generating step of generating map drawing data based on the map data stored in the map data storing step and the sound data obtained in the sound data obtaining step.

FIG. 1

FIG. 1

MAP DATA STORING UNIT — 2101
MAP DRAWING DATA GENERATING UNIT — 2102
DRAWING UNIT — 2105
DISPLAYING UNIT — 2106
SOUND DATA INPUTTING UNIT — 2103
SOUND DRAWING DATA GENERATING UNIT — 2104

EP 1 457 949 A2

FIG. 2

## FIG. 3

## FIG. 4

```
          ( START )
              │
              ▼
┌──────────────────────────────────────┐
│ READ OBJECT VERTEX COORDINATES        │  S201
│ (X,Y,Z,1) AND SURFACE INFORMATION     │
└──────────────────────────────────────┘
              │
              ▼
┌──────────────────────────────────────┐
│ GENERATE THREE-DIMENSIONAL OBJECT     │  S202
└──────────────────────────────────────┘
              │
              ▼
┌──────────────────────────────────────┐
│ LOCAL COORDINATE PROCESS              │  S203
│ TRANSFORMATION PROCESS                │
└──────────────────────────────────────┘
              │
              ▼
┌──────────────────────────────────────┐
│ SET GLOBAL COORDINATES                │  S204
└──────────────────────────────────────┘
              │
              ▼
┌──────────────────────────────────────┐
│ MODEL VIEW TRANSFORMATION PROCESS     │  S205
└──────────────────────────────────────┘
              │
              ▼
┌──────────────────────────────────────┐
│ SET VIEWPOINT COORDINATES             │  S206
└──────────────────────────────────────┘
              │
              ▼
┌──────────────────────────────────────┐
│ PROJECTION TRANSFORMATION PROCESS     │  S207
└──────────────────────────────────────┘
              │
              ▼
┌──────────────────────────────────────┐
│ SET CLIP COORDINATES                  │  S208
└──────────────────────────────────────┘
              │
              ▼
┌──────────────────────────────────────┐
│ VIEWPORT TRANSFORMATION PROCESS       │  S209
└──────────────────────────────────────┘
              │
              ▼
┌──────────────────────────────────────┐
│ SET SCREEN COORDINATES                │  S210
└──────────────────────────────────────┘
              │
              ▼
          ( END )
```

EP 1 457 949 A2

## FIG. 5

## FIG. 6

FIG. 7

# FIG. 8

S203

REGION DIVISION — S601

LOOP 1:
i = 1 TO N — S602

READ VERTEX COORDINATES — S603

LOOP 2:
CHANGE VERTEX COORDINATES — S604

CHANGE LOCAL COORDINATE
TRANSFORMATION MATRIX — S605

$$\begin{pmatrix} 1000 \\ 0100 \\ 0010 \\ 0001 \end{pmatrix} \Rightarrow \begin{pmatrix} 1000 \\ 0S00 \\ 0010 \\ 0001 \end{pmatrix}$$

CHANGE VERTEX COORDINATES — S606

$$[X',Y',Z',1]=[X,Y,Z,1]\begin{pmatrix} 1000 \\ 0S00 \\ 0010 \\ 0001 \end{pmatrix}$$

LOOP 2:
END — S607

LOOP 1:
END — S608

END

## FIG. 9A

## FIG. 9B

FIG. 10

MAP DRAWING DATA GENERATING UNIT /102

MAP DATA STORING UNIT /101

OBJECT GENERATING UNIT /102a

LOCAL COORDINATE TRANSFORMING UNIT /102b

SOUND DATA INPUTTING UNIT /103

MODEL VIEW TRANSFORMING UNIT /102c

DRAWING UNIT /104

PROJECTION TRANSFORMING UNIT /104a

VIEWPOINT TRANSFORMING UNIT /104b

DISPLAYING UNIT /105

## FIG. 11

```
        ( S202 )
           │
           ▼
   ┌──────────────────┐      S901
   │ REGION DIVISION  │
   └──────────────────┘
           │
           ▼
   ┌──────────────────┐      S902
   │ LOOP 1:          │
   │   i = 1 TO N     │
   └──────────────────┘
           │
           ▼
   ┌──────────────────────────┐   S903
   │ READ VERTEX COORDINATES  │
   └──────────────────────────┘
           │
           ▼
   ┌──────────────────────────┐   S904
   │ LOOP 2:                  │
   │ COLORING                 │
   │ CHANGING PROCESS         │
   └──────────────────────────┘
           │
           ▼
   ┌──────────────────────────┐   S905
   │ OBTAIN COLOR A OF ROOF AND │
   │ COLOR A OF BASE VERTEX   │
   └──────────────────────────┘
           │
           ▼
   ┌──────────────────┐      S906
   │ COLOR A'=A+B×S   │
   └──────────────────┘
           │
           ▼
   ┌──────────────────────────────┐  S907
   │ DETERMINE INTERMEDIATE COLORS │
   └──────────────────────────────┘
           │
           ▼
   ┌──────────────────┐      S908
   │ APPLY COLOR DATA │
   └──────────────────┘
           │
           ▼
   ┌──────────────────┐      S909
   │ LOOP 2:          │
   │   END            │
   └──────────────────┘
           │
           ▼
   ┌──────────────────┐      S910
   │ LOOP 1:          │
   │   END            │
   └──────────────────┘
           │
           ▼
        ( END )
```

## FIG. 12A

## FIG. 12B

FIG. 13

```
                                                          ⌒102
                              ┌ - - - - - - - - - - - - - - - - - - - ┐
                              ¦ MAP DRAWING DATA
                    ⌒101      ¦ GENERATING UNIT              ⌒102a
┌─────────────────┐          ¦ ┌─────────────────────────┐
│ MAP DATA        │─────────▶│ │ OBJECT                  │
│ STORING UNIT    │────┐     ¦ │ GENERATING UNIT         │
└─────────────────┘    └────▶│ └────────────┬────────────┘
                              ¦              ▼             ⌒102b
                              ¦ ┌─────────────────────────┐
                    ⌒103      ¦ │ LOCAL COORDINATE        │
┌─────────────────┐          ¦ │ TRANSFORMING UNIT       │
│ SOUND DATA      │          ¦ └────────────┬────────────┘
│ INPUTTING UNIT  │──────────┘              ▼             ⌒102c
└─────────────────┘          ¦ ┌─────────────────────────┐
                              ¦ │ MODEL VIEW              │
                              ¦ │ TRANSFORMING UNIT       │
                              ¦ └────────────┬────────────┘
                              └ - - - - - - -│- - - - - - - - - - - - ┘
                                             ▼                ⌒104
                              ┌ - - - - - - -│- - - - - - - - - - - - ┐
                              ¦ DRAWING      │
                              ¦ UNIT         │
                              ¦              ▼             ⌒104a
                              ¦ ┌─────────────────────────┐
                              ¦ │ PROJECTION              │
                              ¦ │ TRANSFORMING UNIT       │
                              ¦ └────────────┬────────────┘ ⌒104b
                              ¦              ▼                         ⌒105
                              ¦ ┌─────────────────────────┐  ┌──────────────┐
                              ¦ │ VIEWPOINT               │─▶│ DISPLAYING   │
                              ¦ │ TRANSFORMING UNIT       │  │ UNIT         │
                              ¦ └─────────────────────────┘  └──────────────┘
                              └ - - - - - - - - - - - - - - - - - - - ┘
```

## FIG. 14

```
        ( S202 )
           │
           ▼
┌──────────────────────┐  ⟋S1201
│   REGION DIVISION     │
└──────────────────────┘
           │
           ▼
┌──────────────────────╲  ⟋S1202
│   LOOP 1:              │
│      i = 1 TO N        │
└──────────────────────╱
           │
           ▼
┌──────────────────────┐  ⟋S1203
│   Y=(1-S)×WH          │
└──────────────────────┘
           │
           ▼
┌──────────────────────┐  ⟋S1204
│   DESIGNATE REGION    │
└──────────────────────┘
           │
           ▼
┌──────────────────────────────────────┐  ⟋S1205
│ GENERATION PROCESS FOR 3-D OBJECTS    │
└──────────────────────────────────────┘
           │
           ▼
┌──────────────────────╲  ⟋S1206
│   LOOP 1:              │
│      END               │
└──────────────────────╱
           │
           ▼
        ( END )
```

$Y=(1-S)\times WH$

## FIG. 15A

## FIG. 15B

# FIG. 16

```
                                            ╭─ 102
                        ┌ ─ ─ ─ ─ ─ ─ ─ ─ ─ ─ ─ ─ ─ ─ ─ ┐
                        | MAP DRAWING DATA              |
                        | GENERATING UNIT               |
        ╭─ 101          |                        ╭─ 102a |
    ┌──────────────┐    |    ┌──────────────────┐        |
    │ MAP DATA     │───▶│    │ OBJECT           │        |
    │ STORING UNIT │    |    │ GENERATING UNIT  │        |
    └──────────────┘    |    └──────────────────┘        |
                        |             │          ╭─ 102b |
                        |    ┌──────────────────┐        |
                        |    │ LOCAL COORDINATE │        |
                        |    │ TRANSFORMING UNIT│        |
        ╭─ 103          |    └──────────────────┘        |
    ┌──────────────┐    |             │          ╭─ 102c |
    │ SOUND DATA   │───▶│    │ MODEL VIEW       │        |
    │ INPUTTING UNIT│   |    │ TRANSFORMING UNIT│        |
    └──────────────┘    |    └──────────────────┘        |
                        └ ─ ─ ─ ─ ─ ─ ─│─ ─ ─ ─ ─ ─ ─ ─ ┘
                                       │       ╭─ 104
                        ┌ ─ ─ ─ ─ ─ ─ ─│─ ─ ─ ─ ─ ─ ─ ─ ┐
                        | DRAWING       ▼               |
                        | UNIT                   ╭─ 104a |
                        |    ┌──────────────────┐        |
                        |    │ PROJECTION       │        |
                        |    │ TRANSFORMING UNIT│        |
                        |    └──────────────────┘ ╭─ 104b |   ╭─ 105
                        |             │                  |  ┌──────────────┐
                        |    ┌──────────────────┐        |  │ DISPLAYING   │
                        |    │ VIEWPOINT        │───────▶│  │ UNIT         │
                        |    │ TRANSFORMING UNIT│        |  └──────────────┘
                        |    └──────────────────┘        |
                        └ ─ ─ ─ ─ ─ ─ ─ ─ ─ ─ ─ ─ ─ ─ ─ ┘
```

FIG. 17

S205

S1501
REGION DIVISION

S1502
LOOP1:
i = 1 TO N

S1503
READ VERTEX COORDINATES

S1504
LOOP 2:
CHANGE VERTEX
COORDINATES

S1505
OBTAIN MATRIX Z RESULTING FROM
MULTIPLICATION OF MATRIX AFTER LOCAL
COORDINATE TRANSFORMATION AND
MODEL VIEW TRANSFORMATION MATRIX

S1506
CHANGE RESULTING MATRIX Z
USING MAGNITUDE S OF SOUNDS

$$\begin{pmatrix} A & B & C & D \\ E & F & G & H \\ I & J & K & L \\ M & N & O & P \end{pmatrix} \Rightarrow \begin{pmatrix} A & B & C & D \\ E & F & G{\times}S & H \\ I & J & K & L \\ M & N & O & P \end{pmatrix}$$

S1507
LOOP 2:
END

S1508
LOOP 1:
END

END

FIG. 18A

1602

1601

FIG. 18B

1603

1601

EP 1 457 949 A2

# FIG. 19

```
                    ┌ ─ ─ ─ ─ ─ ─ ─ ─ ─ ─ ─ ─ ─ ─ ─ ┐ ⌐102
                    │ MAP DRAWING DATA            │
                    │ GENERATING UNIT             │  ⌐102a
    ⌐101            │ ┌─────────────────────────┐ │
┌──────────────┐    │ │ OBJECT                  │ │
│ MAP DATA     │──► │ │ GENERATING UNIT         │ │
│ STORING UNIT │──► │ └─────────────────────────┘ │
└──────────────┘    │             │               │  ⌐102b
                    │ ┌───────────▼─────────────┐ │
                    │ │ LOCAL COORDINATE        │ │
    ⌐103            │ │ TRANSFORMING UNIT       │ │
┌──────────────┐    │ └─────────────────────────┘ │  ⌐102c
│ SOUND DATA   │    │ ┌───────────▼─────────────┐ │
│ INPUTTING UNIT│──►│ │ MODEL VIEW              │ │
└──────────────┘    │ │ TRANSFORMING UNIT       │ │
                    │ └─────────────────────────┘ │
                    └ ─ ─ ─ ─ ─ ─ ─│─ ─ ─ ─ ─ ─ ─ ┘
                                   │              ⌐104
                    ┌ ─ ─ ─ ─ ─ ─ ─│─ ─ ─ ─ ─ ─ ─ ┐
                    │ DRAWING      │               │
                    │ UNIT         │               │  ⌐104a
                    │ ┌───────────▼─────────────┐ │
                    │ │ PROJECTION              │ │
                    │ │ TRANSFORMING UNIT       │ │
                    │ └─────────────────────────┘ │ ⌐104b        ⌐105
                    │ ┌───────────▼─────────────┐ │    ┌──────────────┐
                    │ │ VIEWPOINT               │ │──► │ DISPLAYING   │
                    │ │ TRANSFORMING UNIT       │ │    │ UNIT         │
                    │ └─────────────────────────┘ │    └──────────────┘
                    └ ─ ─ ─ ─ ─ ─ ─ ─ ─ ─ ─ ─ ─ ─ ┘
```

## FIG. 20

S202

READ ALTITUDE VALUE DATA AND
ALTITUDE REFERENCE DATA — S1801

CALCULATE COLOR CHANGE THRESHOLD Y
$Y = S \times H const$ — S1802

CHANGE COLORS OF
MESH DATA — S1803

END

FIG. 21A

1903   1902

1901

FIG. 21B

1902   1904

1901

EP 1 457 949 A2

FIG. 22

MAP DRAWING DATA GENERATING UNIT _102_

MAP DATA STORING UNIT _101_

OBJECT GENERATING UNIT _102a_

LOCAL COORDINATE TRANSFORMING UNIT _102b_

SOUND DATA INPUTTING UNIT _103_

MODEL VIEW TRANSFORMING UNIT _102c_

PROJECTION CONVERSION MATRIX GENERATING UNIT _2001_

DRAWING UNIT _104_

PROJECTION TRANSFORMING UNIT _104a_

VIEWPOINT TRANSFORMING UNIT _104b_

DISPLAYING UNIT _105_